# EUROPEAN PATENT APPLICATION

(11) **EP 2 257 002 A1**
(43) Date of publication of application: **01.12.2010**
(21) Application number: 09305482.3
(22) Date of filing: 26.05.2009
(51) Int. Cl.: H04L 12/56

(54) **A method for selecting an optimal multi-constrained path between two network nodes across multiple network domains**

(71) Applicant: Alcatel Lucent, 75008 Paris (FR)
(72) Inventor: Bui, Dinh Thai, 92290, Chatenay-Malabry (FR); Pouyllau, Hélia, 91440, Bures-sur-Yvette (FR); Douville, Richard, 91310, Longpont-sur-Orge (FR); Djarallah, Nabil Bachir, 91700, STE GENEVIEVE DES BOIS (FR)
(74) Representative: Camus, Olivier Jean-Claude

(57) **Abstract**

The present invention relates to a building method of a path between a network management element of a domain and another network management element of neighbor domains, a domain comprising a plurality of network nodes. It is **characterized in that** it comprises the steps of:
- When none of the network nodes of said domain is a target network node:
- Expanding a path tree from at least one network node of said domain towards entry network nodes of at least one neighbor domain ;
- Applying node colors to path tree nodes to indicate whether a path tree node is or is not under the scope of a neighbor domain to which a request is to be forwarded ; and
- Forward a request with said path tree expanded to at least one network management element of said neighbor domain.

## Description

### FIELD OF THE INVENTION

The present invention relates to a method of building a path between a network management element of a domain and another network management element of neighbor domains, a domain comprising a plurality of network nodes. The invention also relates to a network management element using said building method and to a selecting method of an optimal path using said method.

Such a method may be used in any multi-domain network system comprising a plurality of domains, such as, but not exclusively, a plurality of interior gateway protocol areas, a plurality of autonomous systems or a plurality of generalized multiprotocol label switching architecture overlay networks.

### BACKGROUND OF THE INVENTION

A method of building a path between a network management element of a domain and another network management element of another domain, a domain comprising a plurality of network nodes, well-known by the man skilled in the art, uses network management elements within each domain in order to compute an optimal path between two network nodes across multiple domains, said optimal path being based on a selection criterion (e.g. cost, number of hops, etc.).

One well-known solution for optimal path computation is the Backward Recursive PCE-base Computation known as BRPC solution which is described in the standard IETF Request for Comment 5441, April, 2009 "A Backward Recursive PCE-based Computation (BRPC) Procedure To Compute". The method comprises the steps of:
- Configuring a specific chain of domains to be covered ; and
- Computing a path across this chain of domains based on computing recursively path trees in a backward direction.

One problem of this known prior art is that even if the BRPC method guarantees to compute the optimal path across a specific set of traversed domains, this solution is not good enough (i.e. not globally optimal) as it supposes that the chain of domains is already known. Only, one specific sequence of PCEs (Path Computation Element) is explored. This means that an external tool/method is mandatory to determine beforehand these chains of domains. Nothing guarantees that this external tool chooses the best domain chain that will provide the optimal path.

### SUMMARY OF THE INVENTION

It is an object of the invention to provide a method of building a path between a network management element of a domain and another network management element of neighbor domains, a domain comprising a plurality of network nodes, which solves the problem mentioned above.

To this end, there is provided a method of building a path between a network management element of a domain and another network management element of neighbor domains, a domain comprising a plurality of network nodes, said method comprising the steps of:
- When none of the network nodes of said domain is a target network node:
   - Expanding a path tree from at least one network node of said domain towards entry network nodes of at least one neighbor domain;
   - Applying node colors to path tree nodes to indicate whether a path tree node is or is not under the scope of a neighbor domain to which a request is to be forwarded ; and
   - Forward a request with said path tree expanded to at least one network management element of said neighbor domain.

As we will see in further details, such a method enables to perform a forward exploration of possible domains in order to look for the optimal path between a given pair of source network node and target/destination network node. Moreover, thanks to the color coding of the nodes within a path tree, the method enables to select path tree nodes which are to be pruned and the ones which are to be used while expanding the path tree. This is performed during the forward exploration of the domains.

In a first not limited embodiment, the method comprises a further step of:
- When a network node of said domain is a target network node:
   - Building an aggregate path tree from the path trees received with the requests by the target network management element; and
   - When all path tree node colors of the aggregate path tree are of a same predefined color, sending back an optimal path selected from the aggregate path tree according to at least one selection criterion.
This permits to compute the optimal path from all the path trees computed across the different domain chains.

In a second not limited embodiment, the expanding step comprises a sub-step of pruning a path tree node which outgoing path doesn't respect at least one specified constraint. It permits to prune, during the forward exploration, path tree nodes which will not lie to valid paths.

In a third not limited embodiment, the method comprises a further step of recording information of the network management element under the scope of said domain before forwarding of the request. It permits to perform a detection of loops within the path tree computed, and/or to send back the optimal path via preceding network management elements.

In a fourth not limited embodiment, the method comprises a further step of further activating the sending of the optimal path based on a timer value. It permits to send back the optimal path even if some requests have been lost and therefore even if the aggregate path tree is not fully completed.

In a fifth not limited embodiment, the method comprises a further step of limiting the domains wherein a path tree is expanded. It permits to bind the domain exploration.

In addition, there is provided a method of selecting a path between a source network node of a source domain and a target network node of a target domain across a plurality of domains, a domain comprising a plurality of network nodes and at least one network management element, said method comprising the steps of applying the building method as characterized above to:
- a source network management element which is within the source domain;
- at least one intermediate network management element which is within an intermediate domain between the source domain and the target domain; and
- a target network management element which is within the target domain.

In addition, there is provided a network management element of a domain able to build a path with another network management element of neighbor domains, a domain comprising a plurality of network nodes, said network management element comprising a control unit which is able to:
- When none of the network nodes of said domain is a target network node:
   - Expand a path tree from at least one network node of said domain towards entry network nodes of at least one neighbor domain;
   - Apply node colors to path tree nodes to indicate whether a path tree node is or is not under the scope of a neighbor domain to which a request is to be forwarded ; and
   - Forward a request with said path tree expanded to at least one network management element of said neighbor domain.

In a first not limited embodiment, the control unit is further able to:
- When a network node of said domain is a target network node :
   - Build an aggregate path tree from the path trees received with the requests by the target network management element; and
   - When all path tree node colors of the aggregate path tree are of a same predefined color, send back an optimal path selected from the aggregate path tree according to at least one selection criterion.

In a second not limited embodiment, the control unit is further able to prune a path tree node which outgoing path doesn't respect at least one specified constraint.

In a third not limited embodiment, a request comprises a network management element chain recorder for recording information of the network management element under the scope of said domain before forwarding of the request.

In a fourth not limited embodiment, a request comprises a time to live counter for limiting the domains wherein the path trees are to be expanded.

In a fifth not limited embodiment, the network management element comprises a target waiting timer for further activating the sending of the optimal path.

In a sixth not limited embodiment, the network management element is a path computation element.

In addition, there is provided a multi-domain network system for selecting an optimal path between a source network node of a source domain and a target network node of a target domain across a plurality of domains, a domain comprises a plurality of network nodes and at least one network management element, said multi-domain network system being able to manage:
- a source network management element which is within the source domain;
- at least one intermediate network management element which is within an intermediate domain between the source domain and the target domain; and
- a target network management element which is within the target domain;
as characterized above.

In addition, there is provided a computer program product for a computer, comprising a set of instructions, which when loaded into said computer, causes the computer to carry out the building method as characterized above.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates a schematic network system comprising network management elements which perform a method of building a path according to the invention;
- Fig.2 illustrates a schematic diagram showing a method of selecting a path using a method of building a path in a not limited embodiment according to the invention;
- Fig.3 illustrates schematically data exchange between network management elements of the network system of Fig.1 according to the building method of Fig.2;
- Fig.4 illustrates some steps of the building method of Fig.2 in more details;
- Fig.5 illustrates schematically in details a step of the selecting method of Fig.2;
- Fig.6 illustrates schematically in more details a path communication element, within a network system, which is able to perform the building method of Fig.2.

### DESCRIPTION OF EMBODIMENTS OF THE INVENTION

In the following description, well-known functions or constructions by the man skilled in the art are not described in detail since they would obscure the invention in unnecessary detail.

The present invention relates to a method of building a path between a network management element of a domain and another network management element of neighbor domains, a domain comprising a plurality of network nodes.

As will be described in further detail below, the invention allows for an automatic and parallel exploration of different sequences of domain chains (and therefore chains of network management elements) from a source network node to a target network node. For each of such domain chains, a virtual path tree VPT is computed on corresponding network management element NME in the forward (from the source network management element NME towards the target network management element NME) direction. The target network management element NME (i.e. the network management element of the target domain) receives the different above path trees and then selects the optimal path according to a selection criterion. As will be described in the following sections, exploring different network management elements sequences leads to loop and termination detection issues that the present method enables to solve.

It is to be noted that in a not limited embodiment, a domain is a collection of network elements within a common sphere of address management or computational responsibility as defined in the IETF standard. In not limited examples, a domain may be an Autonomous System (AS), an interior gateway protocol IGP routing area, or a Generalized Multiprotocol Label Switching overlay network layer.

It is to be noted that:
- An autonomous system AS usually refers to a group of routers within a network that are subject to a common authority and use the same intra-domain routing protocol.
- An area usually refers to a collection of routers that share full network topology information with each other but not necessarily with routers outside the area even those with which they share common administrative control.

It is also to be noted that a network management element NME is aware of:
- the topology of its own domain D, that is to say of how the nodes of said domain D (said nodes comprising said routers) are arranged physically altogether within said domain D, and how they communicate with one another, and what are the Traffic Engineering capabilities (e.g. maximal bandwidth, transmission delay, etc.) on their links;
- the neighbor domains Dn of its own domain D; and
- the entry network nodes of the neighbor domains Dn;
- the network management elements of its neighbor domains.

To this end, a network management element uses a database.

In not limited examples, a network management element NME is:
- a Network Management System, NMS ;
- a Path Computation Element, PCE as per specified in the document RFC4555 - A Path Computation Element (PCE) - based Architecture - August 2006. In this case the database aforementioned is called traffic Engineering Database (TED) ;
- a router ;
- an Operational Support System, OSS.

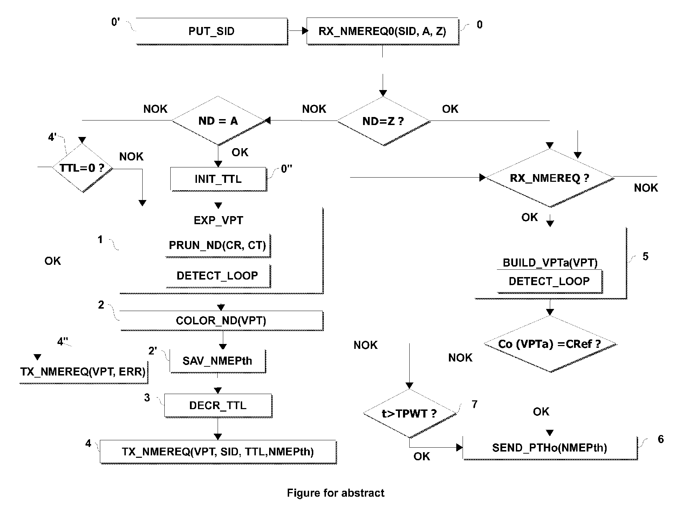

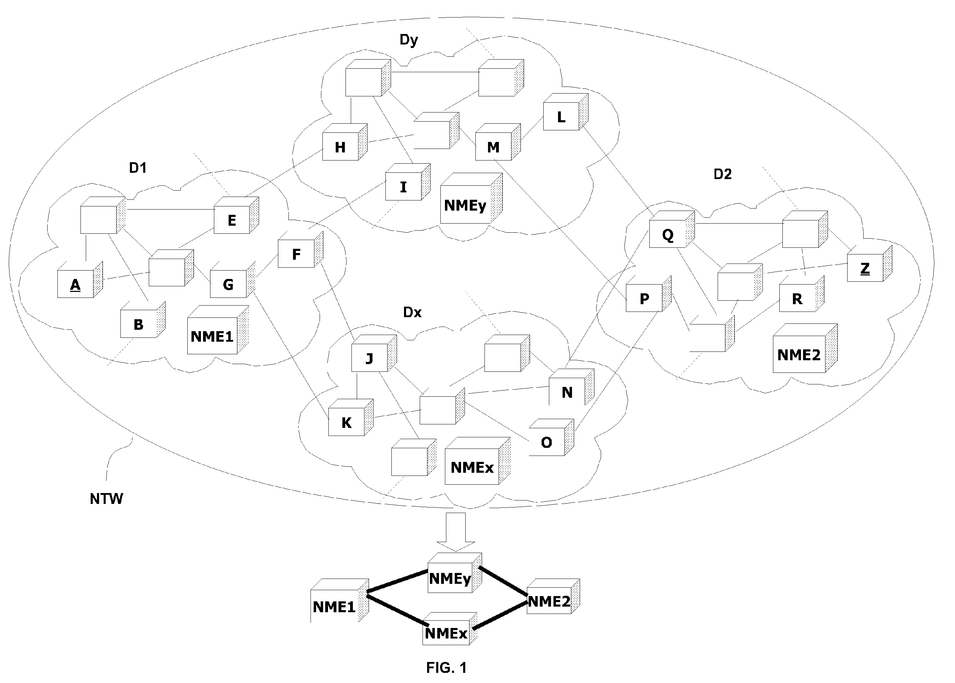

As illustrated in Fig.1, a multi-domain network system NTW ables to manage four domains D1, Dx, Dy and D2, each comprising a plurality of network nodes and one network management element NME1, NMEx, NMEy and NME2 respectively, is taken as a not limited example. Of course, other architectures may be taken as examples where a domain D comprises a plurality of network management elements NME.

The network nodes ND described in a not limited example are IP routers. Thus, when a router A of the domain D1 (called a source network node or here a source router) wants to transmit some data to router Z of another domain D2 (called a target network node or here a target router), a building method performed by a source path communication element NME1 within the source domain D1, intermediate network management elements NMEx, NMEy within intermediate domains Dx, Dy, and the target network management element NME2 within the target domain D2, is used.

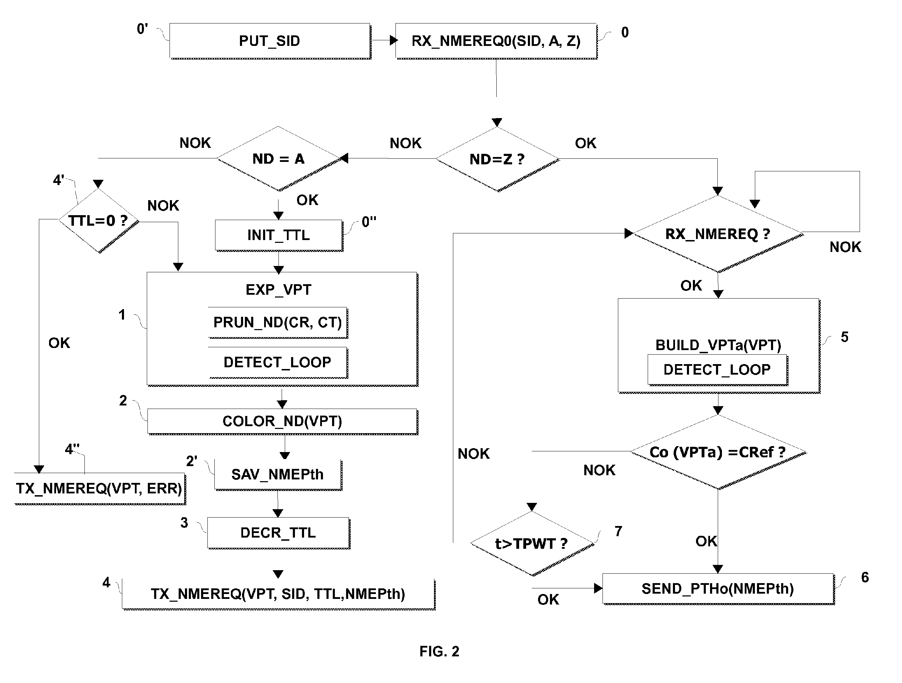

The building method comprises the following steps as illustrated in Fig. 2:
- When none of the network nodes ND of said domain D is a target network node Z:
- Expanding a path tree VPT from at least one network node ND of said domain D towards entry network nodes NDn of at least one neighbor domain Dn (step EXP_VPT);
- Applying node colors Co to path tree nodes VPT_N to indicate whether a path tree node VPT_N is or is not under the scope of a neighbor domain Dn to which a request NMEREQ is to be forwarded (step COLOR_ND(VPT)); and
- Forward a request NMEREQ with said path tree expanded VPT to at least one network management element NME of said neighbor domain Dn (step TX_NMEREQ(VPT, SID, TTL, NMEPth)).

In a not limited embodiment, the building method further comprises the further steps of:
- When a network node ND of said domain D is a target network node Z :
   - Building an aggregate path tree VPTa from the path trees VPT received with the requests NMEREQ by the target network management element NME2 (step BUILD_VPTa(VPT)); and
   - When all path tree node colors Co of the aggregate path tree VPTa are of a same predefined color Cref, sending back an optimal path PTHo selected from the aggregate path tree VPTa according to at least one selection criterion CR (step SEND_PTHo(NMEPth)).

In a not limited embodiment, the expanding step comprises a sub-step of pruning a path tree node ND which outgoing path doesn't respect at least one specified constraint CT (sub-step PRUN_ND(CR, CT)).

In a not limited embodiment, the building method further comprises the further steps of:
- Recording information of the network management element NME under the scope of said domain D before forwarding of the request NMEREQ.
- Further activating the sending of the optimal path PTHo based on a timer value.
- Limiting the domains D wherein a path tree VPT is expanded.

The building method is applied with a method of selecting an optimal path between a source network node A of a source domain D1 and a target network node Z of a target domain D2 across a plurality of domains D, a domain D comprising a plurality of network nodes ND and at least one network management element NME. Said selecting method comprises the steps of applying the building method to:
- a source network management element NME1 which is within the source domain NME1;
- intermediate network management elements NMEx, NMEy which are within intermediate domains D between the source domain NME1 and the target domain NME2; and
- a target network management element NME2 which is within the target domain NME2.

The selecting method and the building method are described in details below.

In the following description, in the not limited embodiment of the communication described, the building method comprises the further steps above-mentioned.

Reference to Fig. 1 to Fig. 4 will be made.

It is to be noted that the phrase "selection criterion" or "optimality criterion" will be equally used in the following.

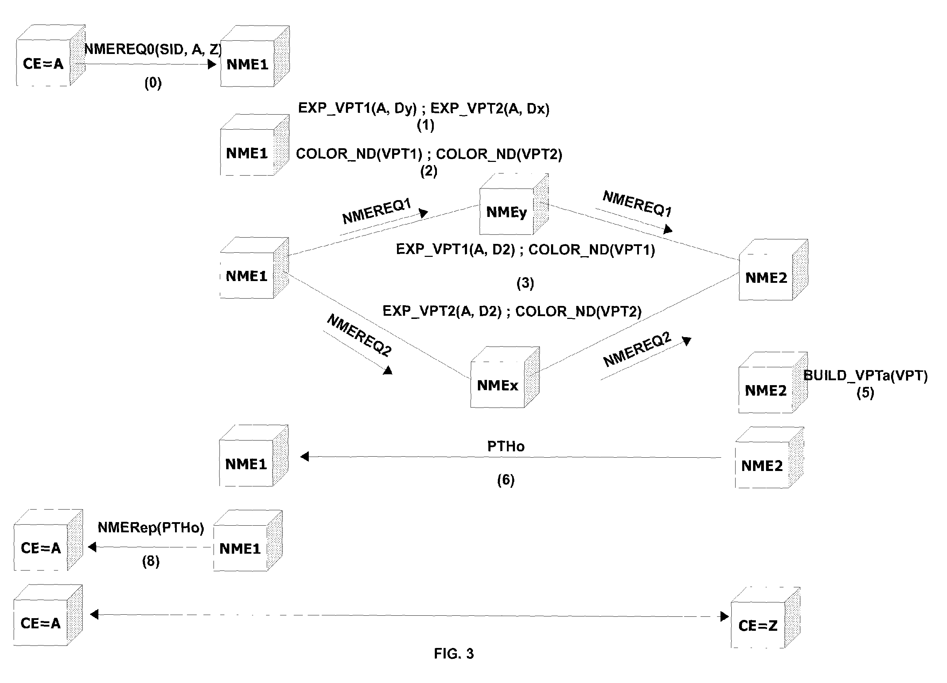

**In an initialization step 0),** as illustrated in Fig. 2 and Fig. 3, one receives an initial request NMEREQ0 from a client element CE (step RX_NMEREQO(SID, A, Z)).
This step initializes the whole building and selecting process of the optimal path between the source router A and the target router Z.

In the example of the management network element NME being a path computation element PCE, the client element CE is a path computation client PCC, a request is a path computation client PCEReq, and a response is a path computation response PCERep.

In a not limited embodiment, this initial request NMEREQ0 is received by the source request NME1 which is within the same domain D1 than the source router A, and the client element CE is the source router A as illustrated in Fig. 3.

A client element CE is a requesting entity that sends a request NMEREQ to a network management element NME. It is to be noted that when a network management element NME sends a request to another network management element NME, it acts as a client element CE.

In a not limited embodiment, an initial request NMEREQ comprises an identification of the source router A and of the target router Z, and therefore the initial request NMEREQ0 comprises the identification of the source router A and the target router Z. It permits the network management elements NME to identify which is the source router A and which is the target router Z.

In another not limited element, the initial request NMEREQ0 further comprises the selection criterion(criteria) CR and the specified constraint(s) CT.

**In a first step 1),** as illustrated in Fig.2, when none of the network nodes ND is the target network node Z, one expands a path tree VPT from at least one network node ND of said domain D towards entry network nodes NDn of neighbor domains Dn.

In a not limited embodiment, this step is performed by the current network management element NME which is within the same domain D than the network node(s) ND from which a path tree is expanded.

In a first not limited embodiment, one expands a path tree VPT from at least one network node ND of said domain D towards all possible entry network nodes NDn of all the neighbor domains Dn. It permits to explore the maximum of network nodes within a neighbor domain Dn in order to find an optimal path. Thus, it is more efficient than exploring only a limited number of network nodes. It is to be noted that the possible entry network nodes are those which permit to reach the target network node Z.

In a second not limited embodiment, one expands a path tree VPT from at least one network node ND of said domain D towards some entry network nodes NDn of all the neighbor domains Dn. It permits to explore the maximum of domains D in order to find an optimal path. Thus, it is more efficient than exploring only a limited number of domains.

In a third not limited embodiment, the first and the second above embodiments are combined together.

For the following description, the third embodiment is taken into example.

It is to be noted sometimes the number of network nodes which may be explored may be limited according to internal domain policy parameters.

Hence, when a network node ND is a source node A, one expands a path tree from said network node ND of said domain towards the entry network nodes NDn of neighbor domains Dn.

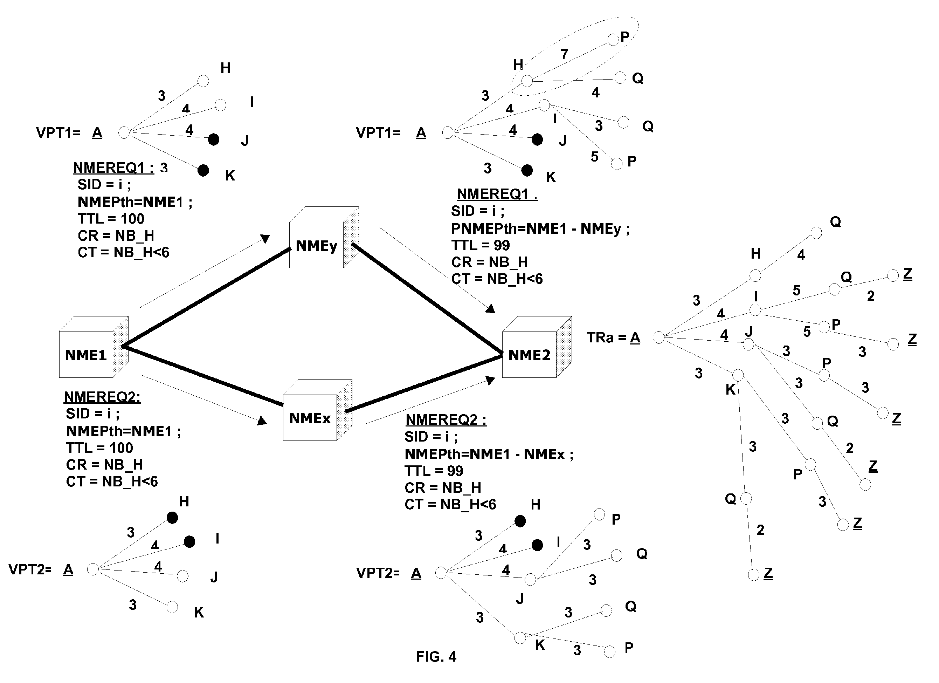

In the example illustrated in Fig.1, the network node A is a source node. Thus, one expands one path tree between the source network node A and the entry network nodes H, I, J, K of the two neighbor domains Dy and Dx. This path tree is referred to as VPT1 or VPT2 when it is to be forwarded respectively to the first neighbor domain Dy and to the second neighbor domain Dx. In this example, both path trees VPT1 and VPT2 comprise five path tree nodes and four branches (also called path BR) A-H, A-I, A-J and A-K as illustrated in Fig. 4.

It is to be reminded that a path BR begins from a path tree node ND and ends at another path tree node ND.

It is to be noted the four paths BR illustrated in Fig. 4 represent incoming paths in the view of the network nodes H, I, J and K, and outgoing paths in the view of the network node A. Hence, an outgoing path is a path built from a network node from which a network management element NME is expanding a path tree; and an incoming path is a path going to a network node towards which a network management element NME is expanding a path tree.

In a not limited embodiment, the building method comprises a further step of identifying the expansions of the path trees VPT between the source network node A and the target network node Z. This step is performed by means of a session identification SID (Step PUT_SID as illustrated in Fig.2). This session identification will permit to check if the path trees belong to a same original request NMEREQ and thus to aggregate them together as will be described further on.

In a not limited variant of said embodiment, the requests NMEREQ comprise said session identification SID. Therefore, the initial request NMEREQ0 comprises also said session identification SID.

In a not limited embodiment, a time to live TTL counter for limiting the domains D wherein path trees are to be expanded is initialized (step INIT_TTL as illustrated in Fig. 2). The use of this counter will be explained later on.

In a first not limited embodiment, as illustrated in Fig.2, the expanding step comprises a sub-step of pruning a path tree node ND which outgoing path doesn't respect at least one specified constraint CT.

In a second not limited embodiment, the pruning of a path tree node ND is further performed according to the selection criterion CR. It permits to prune the path tree node which outgoing path doesn't improve existing paths with respect to said selection criterion CR.

It is to be noted that in a not limited embodiment, the second embodiment (using at least one specified constraint CT and a selection criterion CR combined together) may be performed according to well-known optimization methods of Dynamic Programming.

It is to be noted that in a variant of these two embodiments, a plurality of constraints CR and a plurality of selection criteria CT may be used.

Hence, according to the second embodiment, the pruning is performed so that:
- it respects constraint(s) CR defined in a not limited embodiment within the request NMEREQ ; and
- it does not contain branches which are not improving the path tree VPT with respect to the selection criterion CR (i.e. a path having the same constraint(s) value(s) with another path but a worse selection criterion value).

In a not limited embodiment, this pruning sub-step is performed by the current network management element NME which is within the same domain D than the network node(s) ND from which a path tree is expanded.

In not limited embodiments, the constraint(s) CT might be:
- a bandwidth criterion;
- the use of a restricted number of resources, in term of memory, CPU operations, of time consuming;
- an end-to-end transmission delay across a path;
- a global availability rate over nodes; etc.

In not limited embodiments, the optimality criterion CR might be:
- the number of crossed nodes also called number of hops NB_H (between one network node of a domain D to another neighbor network node of a neighbor domain Dn);
- a financial cost associated to resources in the management network element's TED (Traffic Engineering Database) or by policy configuration;
- the residual bandwidth;
- a combination of the criteria above and others; etc.

It is to be noted that paths respecting at least one specified constraint CT are called feasible or valid path (if there is no specified constraint, all the paths are feasible. A constraint CT is related to Traffic Engineering metrics but may also refer to a Quality of Service (QoS) parameter.

It is also to be noted that a selection criterion CR, also known as objective function or also optimality criterion, permits to select the path that maximizes or minimizes this criterion within a plurality of aforementioned feasible paths. In a not limited embodiment, the requests NMEREQ comprise said constraint(s) CT. Therefore, the initial request NMEREQ0 comprises also said constraint(s) CT.

In a not limited embodiment, the requests NMEREQ comprise said optimality criterion CR. Therefore, the initial request NMEREQ0 comprises also said optimality criterion CR.

Of course, these two embodiments may be combined so that the requests NMEREQ include the constraints CT and the criterion CR.

In a not limited example, the criterion CR is the number of crossed nodes NB_H (between a node ND and a neighbor node NDn) and a constraint CT is set to 6 for the same criterion NB_H referring to the number of crossed nodes.

As illustrated in the not limited example of Fig. 4, all the paths A-H; A-I; A-J and A-K has a metric (illustrated here as a number applied to a path) which fulfills the constraint CT (the metrics are lower than 6).

In a not limited embodiment, the expanding step comprises a further sub-step of loop detection during the expansion of a path tree VPT (sub-step DETECT_LOOP as illustrated in Fig. 2). The following steps are performed for said loop detection:
a) Detection of a request NMEREQ as being forwarded towards a same network management element NME twice, and
b) Detection of a loop within the path tree VPT.

In a not limited variant of said embodiment, the first step a) is performed by means of the network management element chain recorder NMEPth above-mentioned.

It is to be noted that this variant may be applied when at least one network management element NME which has been used during the selecting method across the domains D is "stateless", that is to say, is unaware (has not saved in memory) of the path tree's expansions it has performed, of the network nodes it has used, etc within its own domain D.

On the contrary, when all of said network management elements NME are "statefull", this variant is not useful.

In a not limited variant of said embodiment, the second step b) is activated only when step a) detection provides with positive result.

In a not limited variant of said embodiment, the second step b) is activated regardless of step a) result.

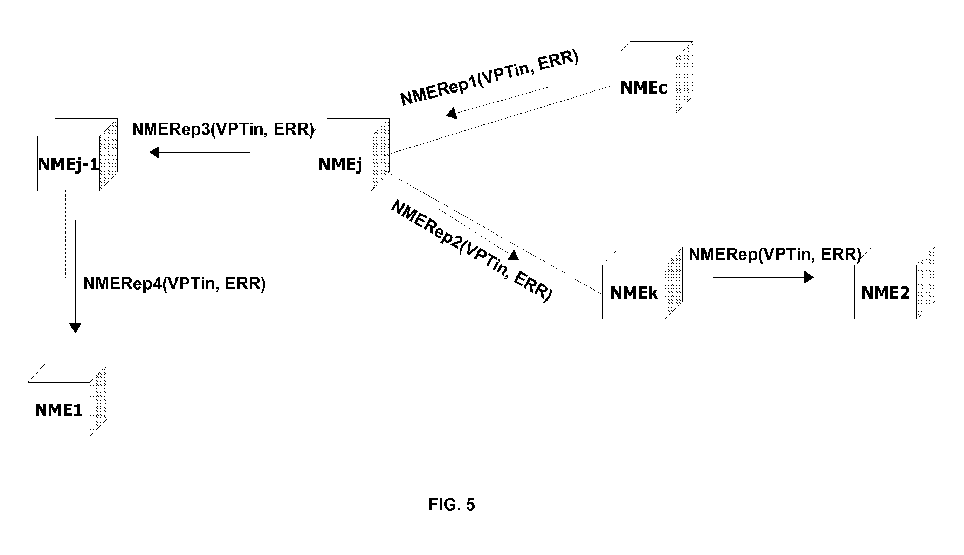

In a not limited embodiment, when a loop is detected within an expanded path tree VPT of a current network management element NMEc, the following sub-steps are performed as illustrated in Fig. 5.
i) The current network management element NMEc sends back the path tree VPTin (where VPTin is the path tree VPT received by the current network management element NME) and an error code ERR to the preceding network management element NMEj (which has sent the request NMEREQ to NMEc) on the return path (using the network management element chain recorder NMEPth if necessary).
   In a not limited variant of said embodiment, said path tree VPTin and the error code ERR are sent by means of a response message NMERep1 (VPTin, ERR).
ii) If for any network management element NMEj on the return path (thus for this preceding network management element NMEp):
   - If said network management element NMEj is different from the target network management element NME2, then
      - If it is waiting for other response messages NMERep,
         - Then it waits for the reception of such response messages NMERep and it forwards the response message NMERep2(VPTin, ERR) to a subsequent network management element NMEk from which it is awaiting response messages (note that there might be several such NMEk). It means that said network management element NMEj has sent before a plurality of requests NMEREQ, and thus that the building of an optimal path has not been performed by the target network management element NME2 yet;
      - else If said network management element NMEj is different from the source network management element NME1, it forwards it (NMERep3(VPTin, ERR)) to its preceding network management element NMEj-1 until the source network management element NME1 is reached (NMERep4(VPTin, ERR)),
      - otherwise it considers the expanded path tree VPT as invalid;
   - If said network management element NMEj is equal to the target network management element NME2, then it updates the aggregate path tree VPTa with the node colors from the received VPTin as described in iii) below.
iii) The update is performed as followings:
   If the nodes of the path tree VPTin received are white, their colors Co are updated as white in the aggregate path tree VPTa. It means that none other path tree VPT is to be expected to complete these nodes within the aggregate path tree VPTa.
If the nodes of the path tree VPTin received are black, and:

If they already exist in the aggregate path tree VPTa, their colors Co are not updated in the aggregate path tree VPTa if they are white within the aggregate path tree VPTa. It means that none other path tree are to be expected to complete these nodes within the aggregate path tree VPTa.

If they haven't already existed in the aggregate path tree VPTa, they are disregarded as an error code ERR is received, and therefore their colors Co are not updated in the aggregate path tree VPTa.

Hence, it is to be noted that a black color node indicates that other path trees VPT are expected in order to complete said node within the aggregate path tree VPTa, whereas a white color node indicates that no other path trees VPT are expected. In this latter case, this node will be removed from the selection step of the optimal path PTHo as described further on.

It is to be noted that the session identification SID is used within this loop detection step in order to know if the requests NMEREQ come from a same original request NMEREQ.

**In a second step 2),** as illustrated in Fig.2, one applies node colors Co to path tree nodes VPT_N to indicate whether a path tree node VPT_N is or is not under the scope of a neighbor domain D to which a request NMEREQ is to be forwarded.

In a not limited embodiment, this step is performed by the current network management element NME which is within the same domain D than the network node(s) ND from which a path tree VPT is expanded.

Hence, in the given example, for the expanded path tree (referenced VPT1) which is to be forwarded to the first neighbor domain Dy, one applies a node color Co, which is illustrated as white in Fig. 4, to the path tree nodes H, I to indicate to the intermediate network management element NMEy that they are under its scope (i.e. the domain Dy's scope) to which a request NMEREQ1 is to be forwarded, as illustrated in Fig. 3 or Fig.4.
Another node color Co, a black color in a not limited example illustrated in Fig. 4, are assigned to the two other path tree nodes J and K which are not under the scope of the neighbor domain Dy, but which are within the scope of the neighbor domain Dx. Hence, when NMEy will receive NMEREQ1 and activates it EXP_VPT function, this last will ignore nodes J and K.

In the same way, for the same path tree expanded (now referenced VPT2) which is to be forwarded to the second neighbor domain Dx, one applies a node color Co, which is illustrated as white in Fig. 4, to the path tree nodes J, K to indicate that they are under the scope of the intermediate network management element NMEx (i.e. under the scope of the domain Dx) to which a request NMEREQ2 is to be forwarded, as illustrated in Fig. 3. Another node color Co, the black color in a not limited example illustrated in Fig. 4, is assigned to the two other path tree nodes H and I which are not known by domain Dx.

As one will see, a node color indicates a network management element NME (which receives a request NMEREQ) which network node it has to expand or not.

In a not limited embodiment, the building method comprises **a further step 2')** of recording information of the network management element NME under the scope of said domain (D) before forwarding of the request NMEREQ (step SAV_NMEPth as illustrated in Fig. 2).

In a not limited variant of said embodiment, this step is performed by means of a network management element chain recorder NMEPth.

In a not limited variant of this embodiment, a network management element NME comprises said network management element chain recorder NMEPth.

Hence, in the example of Fig. 4, when the first request NMEREQ1 is to be forwarded to the intermediate network management element NMEy from the source network management element NME1, the network management element chain recorder NMEPth records information of said source network management element NME1 (Identification ID or IP address for example). When the request NMEREQ1 is subsequently to be forwarded from the intermediate network management element NMEy to the target network management element NME2, the network management element chain recorder NMEPth also records information of said intermediate network management element NMEy (identification ID or IP address for example). Thus, there is a record of the whole network management element chain NME1, NMEy, NME2 in one hand, and NME1, NMEx, NME2 in the other hand to which a request NMEREQ1 and NMEREQ2 is respectively forwarded.

**In a third step 3),** as illustrated in Fig.2, in not limited embodiment, one limits the domains D wherein a path tree VPT is expanded.

In a not limited embodiment, this step is performed by means of the time to live counter TTL which is decreased, for example by one unity, each time a network management element NME is reached by a request NMEREQ.
In a not limited variant of this embodiment, a request NMEREQ comprises said time to live counter TTL (step DECR_TTL as illustrated in Fig. 2).

Thus, when a network management element NME receives a request NMEREQ with a time to live counter TTL equal to zero (step 4' illustrated), the expansion of the path tree VPT is stopped and the network management element NME transmits the request NMEREQ to the next network management element NME with the path tree VPTin received (step TX_NMEREQ(VPT, ERR) as illustrated in Fig. 2). It is to be noted that the network management element NME may return also a response message NMERep in the same way as explained above in the case of a loop being detected (illustrated by Fig.5).

**In a fourth step 4),** as illustrated in Fig.2, one forwards a request NMEREQ with said path tree expanded VPT to at least one network management element NME of said neighbor domain Dn.

In a not limited embodiment, this step is performed by the current network management element NME which is within the same domain D than the network node(s) ND from which a path tree is expanded.

Hence, in the given example, as illustrated in Fig. 3 and in Fig. 4, one forwards:
- a first request NMEREQ1 with the path tree expanded VPT1 to a network management element NMEy of the first neighbor domain Dy ; and
- a second request NMEREQ2 with the same path tree expanded VPT2 to a network management element NMEx of the first neighbor domain Dx, but with different node colors than the path tree VPT1.

After being applied on the source network management element NME1, these three steps of the building method described above are subsequently applied on the intermediate network management elements NMEx, NMEy which are within intermediate domains D between the source domain D1 and the target domain D2, when they receive respectively the first request NMEREQ1 and the second request NMEREQ2.

Therefore, as illustrated in Fig. 4:
- The first path tree VPT1 is expanded from the network nodes H and J of the intermediate domain Dy towards the entry network nodes P and Q respectively of the neighbor domain NME2. The "white" color is applied to the network nodes P and Q, as there are under the scope of the neighbor domain NME2 to which the first request NMEREQ1 is to be forwarded ; and
- The second path tree VPT2 is expanded from the network nodes J and K of the intermediate domain Dx towards the entry network nodes P and Q of the neighbor domain NME2. The "white" color is applied to the network node P and Q, as there are under the scope of the neighbor domain NME2 to which the first request NMEREQ1 is to be forwarded.

Then, as illustrated in the not limited example of Fig. 4, the path node P is pruned and the outgoing path H-P also, because the outgoing path H-P (illustrated in the dashed circle) has a metric equal to 7, which is greater than a specified constraint CT (which is equal to 6 in the example taken), a selection criterion CR being the number of hops.

Hence, the two path trees VPT1, VPT2 now comprise six and seven path tree nodes respectively, as illustrated in Fig. 4.

Then, as illustrated in Fig. 3 or 4:
- The first request NMEREQ1 is forwarded with the expanded first path tree VPT1 to the network management element NME2 of the neighbor domain D2 of the first intermediate domain Dy ; and
- The second request NMEREQ2 is forwarded with the expanded second path tree VPT2 to the network management element NME2 of the first neighbor domain D2 of the second intermediate domain Dx.

Path trees VPT1, VPT2 are therefore expanded across the different neighbor domains Dn of a current domain D and so on all across the domains D, and the requests NMEREQ associated are forwarded across the different network management elements NME of each neighbor domains Dn of a current domain D until it reaches the target network management element NME2 which is found within the same domain as the target network node Z. Moreover paths BR which don't respect one of the specified constraints CR and/or don't improve the path tree with respect to an optimality criterion CR are pruned directly by the network management element NME of the current domain D (where a path tree is expanded), during the forward exploration of the domains.

Hence, when a target network management element NME2 of the target domain D2 received a request NMEREQ, the following steps are performed.

**In a fifth step 5),** as illustrated in Fig.2, when a network node ND of said domain D is a target network node Z, one builds an aggregate path tree VPTa from the path trees VPT received with the requests NMEREQ by a target network management element NME2.

It is to be noted that the requests NMEREQ having the same session identification SID are used.

It is to be noted that a target network management element NME2 is within the same domain D2 of said network node Z.

In a not limited embodiment, this step is performed by the target network management element NME2.

Each time the network management element NME2 receives a request NMEREQ (step RX_NMEREQ illustrated in Fig. 2), it aggregates the path tree VPT received with said request NMEREQ with the other path trees VPT received with the other requests NMEREQ.

Hence, in the example illustrated in Fig. 4, one builds the aggregate path tree VPTa from:
- the first path tree VPT1 of the first request NMEREQ1 received by the network management element NME2 under the same domain D2 of said target network node Z; and
- the second path tree VPT2 of the second request NMEREQ2 received by the network management element NME2 under the same domain D2 of said target network node Z.

This step is repeated until all the node colors Co of the aggregate path tree VPTa are of the same predefined color Cref, which is white in Fig.4.

Thus, while there remains path tree nodes in node colors Co different from Cref (e.g. black nodes in Fig. 4), the aggregate path tree VPTa is meant as uncompleted. And, the target network management element NME2 waits for further requests NMEREQ with their associated path tree VPT in order to complete some paths BR of said aggregate path tree VPTa.

**In a sixth step 6),** as illustrated by Fig.2, when all path tree node colors Co of the aggregate path tree VPTa are of a same predefined color Cref, one sends back, an optimal path PTHo selected from the aggregate path tree VPTa according to a selection criterion CR.

It is to be noted that in the not limited given example, the predefined color Cref is white.

In a not limited embodiment, this step is performed by the target network management element NME2.

It is to be noted that the optimal path PTHo is sent back to the source network management element NME1 within the same domain of a source network node A.

When all path tree node colors Co are of the same color Cref, the building of the aggregate path tree VPTa is meant to be full completed. All the domains D of the network NWT have been explored (which may have been limited, in a not limited embodiment, by the time to live counter TTL or by a policy parameter which limits the number of neighbor domains from each current domain as described before).

Hence, in the example of Fig. 4, as all the path tree nodes VPT_N of the aggregate tree VPTa are of the white color, the building of the aggregate tree VPTa is considered as finished. Thus, an optimal path PTHo is computed from the aggregate path three VPTa according to a selection criterion CR, and as illustrated in Fig. 3, and is sent back to the source network management element NME1 which is within the same domain D1 of the source network node A.

While the node colors Co of a path BR of a path tree VPT received are all white and said path tree VPT doesn't contain the target network node Z, it means that said branch has been pruned (according to the pruning sub-step described before in the expanding step). Therefore, the target network management element NME2 will remove such useless branches before the selection of the optimal path PTHo.

In a first not limited embodiment, the optimal path PTHo is sent back to the source network management element NME1 using the network management element chain recorder NMEPth described before. It permits to a target network management element NME2 to know which path it will use to send back the optimal path PTHo.

This embodiment may be deployed when at least one network management element NME implied in the selecting method across all the domains D is "stateless".

On the contrary, when all of said network management elements NME are "statefull", the network management element chain recorder NMEpth is not useful.

In a second not limited embodiment, the optimal path PTHo is sent back to the source network management element NME1 within the request-response hop-by-hop context: each network management element NME sends the optimal path via a response NMEREP to all preceding network management element NME from which it has beforehand received a request NMEREQ.

**In a seventh step 7),** as illustrated in Fig.2, one further activates the sending of the optimal path PTHo based on timer value.

In a not limited embodiment, this step is performed by the target network management element NME2.

Said step permits to send back said optimal path PTHo even if the aggregate path tree VPTa is not completed, that is to say even if all the path tree nodes of said aggregate path tree VPTa are not all of the same color node Cref.

Indeed, in some situations, there may be a loss of some requests NMEREQ across the domains D, or there may be some traffic congestion which leads to an increasing time when forwarding the requests NMEREQ across all the domains D, or there may be some path tree nodes VPT_N which have been pruned in the course of the expansion within a network management element NME (as described before with the time to live counter TTL equal to 0). Thus, this step permits to solve these problems.

In a not limited embodiment, this step is performed by means of a target waiting timer TPWT. Said target waiting timer TPWT may be:
- initialized at reception of a first request NMEREQ by the target network management element NME2, and
- stopped at completion of the aggregate VPTa.

**In an eighth step 8),** as illustrated in Fig. 3, the optimal path PTHo is transmitted from the source network management element NME1 to the source network node A, which is a source router in the example.
In a not limited example, the transmission is performed by means of a message NMERep(PTHo).

Therefore, the source router A is aware of the optimal path PTHo and is now able to communicate with the target router Z via said optimal path PTHo.

It is to be understood that the order of the steps above described has been mentioned and illustrated in not limited embodiments. Of course, any other orders of the steps, when applicable, may be carried out. For example, the step 2') illustrated in Fig. 2 may be carried out in parallel with the step 1).

Hence, the selecting method which is based on the building method of a path between one network management element NME of a domain D and other network management elements NME of neighbor domains Dn, improves the building of an optimal constraint path across multiple domains between a source network node and a target network node as it permits in particular to:
- perform a forward exploring of the domains D without reducing the exploring to a specific chain of domains D;
- prune useless paths in the forward direction in order to limit unnecessary further exploration of these paths and related request sizes.

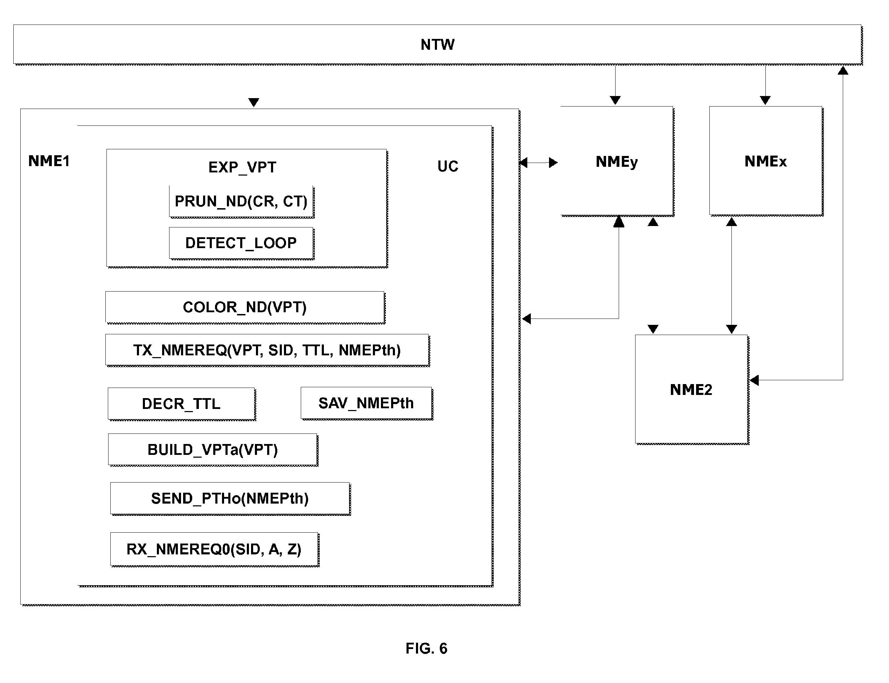

The selecting method and the building method described are carried out respectively by Fig.6:
- A multi-domain network system NTW for selecting an optimal path between a source network node A of a source domain D1 and a target network node Z of a target domain D2 across a plurality of domains D, a domain D comprises a plurality of network nodes ND and at least one network management element NME; and
- A network management element NME of a domain D able to build a path with another network management element NME of neighbor domains Dn, a domain D comprising a plurality of network nodes ND.

As illustrated on Fig. 6, said multi-domain network system NTW is able to manage:
- the source network management element NME1 which is within the source domain D1;
- intermediate network management elements NMEx, NMEy which are within intermediate domains D between the source domain D1 and the target domain D2; and
- the target network management element NME2 which is within the target domain D2.

The source, intermediate and target network management elements NME are described hereinafter according to Fig. 3 to Fig. 6.

It is to be noted that in Fig. 6, in view of efficiency, only the source network management element NME1 has been illustrated in detailed. This detailed illustration should be also applied to the other network management elements NMEx, NMEy, NME2.

As illustrated on Fig. 3 to Fig. 5, a network management element NME comprises in particular a control unit UC which is able to:
- When none of the network nodes ND of said domain D is a target network node Z:
   - Expand a path tree VPT from at least one network node ND of said domain D towards entry network nodes NDn of at least one neighbor domain Dn ;
   - Apply node colors Co to path tree nodes VPT_N to indicate whether a path tree node VPT_N is or is not under the scope of a neighbor domain D to which a request NMEREQ is to be forwarded ; and
   - Forward a request NMEREQ with said path tree expanded VPT to at least one network management element NME of said neighbor domain Dn.

In a not limited embodiment, the control unit UC of the network management element NME is further able to:
- When a network node ND of said domain D is a target network node Z:
   - Build an aggregate path tree VPTa from the path trees VPT received with the requests NMEREQ by the target network management element NME; and
   - When all path tree node colors Co of the aggregate path tree VPTa are of a same predefined color Cref, send back an optimal path PTHo selected from the aggregate path tree VPTa according to at least one selection criterion CR.

In a not limited embodiment, the control unit UC of the network management element NME is further able to prune a path tree node ND which outgoing path doesn't respect at least one specified constraint CT.

In a not limited embodiment, the network management element NME further comprises a target waiting timer TPWT for further activating the sending of the optimal path PTHo.

In not limited embodiments, a request NMEREQ comprises:
- the expanded path tree VPT;
- the network management element chain recorder NMEPth for recording information of the network management element NME under the scope of said domain D before forwarding of the request NMEREQ;
- the time to live counter TTL for limiting the domains D wherein the path trees are to be expanded;
- the session identification SID for identifying the expansions of the path trees between the source network node A and the target network node Z.

In a not limited embodiment, a request NMEREQ is based on the PCEP messages standards defined by the IETF organization, referenced RFC4655 and RFC5440, when the network management element is a path computation element for example.

In this case, the selection criterion may be defined within a path computation request, called PCEReq, as described in the IETF Request for Comment 4657, September 2006, "Path Computation Element Communication Protocol Generic Requirements".

In this case also, in not limited embodiments:
- the field ERO is used to transport the expanded path tree VPT;
- the field IRO is used to transport the colors of network nodes;
- a new field type length value (TLV) is used to transport the session identification SID;
- a new field type length value (TLV) is used to transport the network management element chain recorder NMEPth;
- a new field type length value (TLV) is used to transport the time to live counter TTL.

Moreover, in this case, in a not limited embodiment, the optimal path is sent back by means of a path computation response message PCERep based on the PCEP messages standards defined by the IETF organization, referenced RFC4655 and RFC5440.

It is to be understood that the present invention is not limited to the aforementioned embodiments and variations and modifications may be made without departing from the spirit and scope of the invention. In the respect, the following remarks are made.

It is to be understood that the present invention is not limited to the aforementioned application.

It may be used for optimal inter-domain path computation such as in not limited examples:
- Intra-carrier case:
   - in optics, when an operator network is split in multiple domains with each domain gathering transport equipments from one vendor for example.
   - in IP/MPLS (Internet Protocol/Multiprotocol Label Switching), when an operator network is divided into multiple domains (i.e. IGP areas) for scalability purpose.
- Inter-carrier case: within a trusted alliance of carriers where each carrier NME is likely to know about its neighbor network management element NME.

The invention may be applied within a carrier network or within a trusted alliance between carriers using network management elements NME from the same vendor.
However, standardization is required when it comes to the interoperability between different vendors' NMEs.

It is to be understood that the present invention is not limited to the aforementioned embodiments.

For example, in a not limited embodiment, the source network management element NME1 may trigger a timeout when sending a NMEREQ. It permits to solve problems of the loss of requests NMEREQ and indefinite waiting for response messages.

Hence, if the timeout ends, the source network management element NME1 will concludes that its request NMEREQ has no response and thus that there is no possible path between the source network node A and the target network node Z.

In another not limited embodiment, a domain D comprises a plurality of network management elements NME. In this case, a request NMEREQ might be forwarded to several network management elements NME of the neighbor domain Dn depending on the capabilities advertised by the domains D of the network management element NME (i.e. a request NMEREQ is forwarded to network management elements NME covering domains having adjacency link with the current network management element NME). Therefore, if a network management element NME of a neighbor domain Dn rejects a request NMEREQ for any reason, said request NMEREQ may reaches other neighbor domains Dn via the other network management elements NME and therefore has more chance to reach the target network management element NME2.

In another not limited embodiment, a path tree VPT may be forwarded separately from its associated request NMEREQ as described before. That means that the request NMEREQ doesn't comprise said path tree VPT.

In another not limited embodiment, new TLVs (Type Length Value) may be used, in a proprietary manner, in the PCEP protocol defined by IETF (for example by adding new TLVs in the LSPA (LSP Attribute) object of the NME Request message). These new TLVs may comprise the path trees VPT, the node color, the session identification in not limited examples.

In another not limited embodiment, the number of neighbor domains Dn (and hence of neighbor network management elements NME) to be explored (hence where a request NMEREQ is to be forwarded) may be parameterized for scalability reasons in a big network system NTW.

In another not limited embodiment, a node color is specified per network management element NME and associated to the latter. It avoids a node color to be normalized between all the network management elements NME. In the not limited example of a path computation element PCE, a new field type length value TLV may be used to transport this specified node color within a path computation request PCEREQ.

It is to be understood that the methods and the elements according to the invention are not limited to any implementation.

There are numerous ways of implementing functions of the building and selecting methods by means of items of hardware or software, or both, provided that a single item of hardware or software can carry out several functions. It does not exclude that an assembly of items of hardware or software or both carry out a function. For example, the expanding step 1) of a path tree may be combined with the coloring step 2) of the path tree nodes, thus forming a single function without modifying the building method or selecting method in accordance with the invention.

Said hardware or software items can be implemented in several manners, such as by means of wired electronic circuits or by means of an integrated circuit that is suitable programmed respectively. The integrated circuit can be contained in a computer or in a network management element NME. Said network management element NME comprises a unit control as described previously, said unit control being hardware or software items as above stated.

The integrated circuit comprises a set of instructions. Thus, said set of instructions contained, for example, in a computer programming memory or in a network management element memory, may cause the computer or the network management element to carry out the different steps of the building method.

The set of instructions may be loaded into the programming memory by reading a data carrier such as, for example, a disk. A service provider can also make the set of instructions available via a communication network such as, for example, the Internet.

Hence, the invention comprises the further following advantages:
- It avoids leading to under-optimal and/or unfeasible paths as the cited prior art;
- It permits to have a complete automatic procedure to compute optimal constraint inter-domain path and explore multiple NME sequences;
- It implements automatic exploration of different possible domain chains as opposed to the cited prior art. There is no need for the knowledge beforehand of a specific domain chain.
- It permits to prune useless paths in the forward direction leading to a decrease of flooding of requests and thus leading to more efficiency, thanks to the node color coding. Therefore, it is adapted for large topologies of networks as opposed to the cited prior art;
- It permits to detect loops during the expansion of the path trees by means of the network management element chain recorder;
- It permits to guarantee to choose the best domain chain that will give the optimal path or even a valid (with respect to the defined constraints) path compared to other domain chains as opposed to the cited prior art; and
- It is simple to implement;

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. A method of building a path between a network management element (NME) of a domain (D) and another network management element (NME) of neighbor domains (Dn), a domain (D) comprising a plurality of network nodes (ND), said method comprising the steps of :
- When none of the network nodes (ND) of said domain (D) is a target network node (Z):
- Expanding a path tree (VPT) from at least one network node (ND) of said domain (D) towards entry network nodes (NDn) of at least one neighbor domain (Dn) ;
- Applying node colors (Co) to path tree nodes (VPT_N) to indicate whether a path tree node (VPT_N) is or is not under the scope of a neighbor domain (D) to which a request (NMEREQ) is to be forwarded ; and
- Forward a request (NMEREQ) with said path tree expanded (VPT) to at least one network management element (NME) of said neighbor domain (Dn).

2. A method according to claim 1, wherein it comprises the further steps of:
- When a network node (ND) of said domain (D) is a target network node (Z) :
- Building an aggregate path tree (VPTa) from the path trees (VPT) received with the requests (NMEREQ) by the target network management element (NME2); and
- When all path tree node colors (Co) of the aggregate path tree (VPTa) are of a same predefined color (Cref), sending back an optimal path (PTHo) selected from the aggregate path tree (VPTa) according to at least one selection criterion (CR).

3. A method according to the previous claim 1 or claim 2, wherein the expanding step comprises a sub-step of pruning a path tree node (ND) which outgoing path doesn't respect at least one specified constraint (CT).

4. A method according to any one of the previous claim 1 to 3, wherein it comprises a further step of recording information of the network management element (NME) under the scope of said domain (D) before forwarding of the request (NMEREQ).

5. A method according to any one of the previous claim 2 to 4, wherein it comprises a further step of further activating the sending of the optimal path (PTHo) based on a timer value.

6. A method according to any one of the previous claim 1 to 5, wherein it comprises a further step of limiting the domains (D) wherein a path tree (VPT) is expanded.

7. A method of selecting a path between a source network node (A) of a source domain (D1) and a target network node (Z) of a target domain (D2) across a plurality of domains (D), a domain (D) comprising a plurality of network nodes (ND) and at least one network management element (NME), said method comprising the steps of applying the building method as claimed in any one of the previous claims 1 to 6 to
- a source network management element (NME1) which is within the source domain (D1);
- at least one intermediate network management element (NMEx, NMEy) which is within an intermediate domain (D) between the source domain (D1) and the target domain (D2); and
- a target network management element (NME2) which is within the target domain (D2).

8. A network management element (NME) of a domain (D) able to build a path with another network management element (NME) of neighbor domains (Dn), a domain (D) comprising a plurality of network nodes (ND), said network management element comprising a control unit (UC) which is able to:
- When none of the network nodes (ND) of said domain (D) is a target network node (Z):
- Expand a path tree (VPT) from at least one network node (ND) of said domain (D) towards entry network nodes (NDn) of at least one neighbor domain (Dn) ;
- Apply node colors (Co) to path tree nodes (VPT_N) to indicate whether a path tree node (VPT_N) is or is not under the scope of a neighbor domain (D) to which a request (NMEREQ) is to be forwarded ; and
- Forward a request (NMEREQ) with said path tree expanded (VPT) to at least one network management element (NME) of said neighbor domain (Dn).

9. A network management element (NME) according to the previous claim 8, wherein the control unit (UC) is further able to :
- When a network node (ND) of said domain (D) is a target network node (Z) :
- Build an aggregate path tree (VPTa) from the path trees (VPT) received with the requests (NMEREQ) by the target network management element (NME); and
- When all path tree node colors (Co) of the aggregate path tree (VPTa) are of a same predefined color (Cref), send back an optimal path (PTHo) selected from the aggregate path tree (VPTa) according to at least one selection criterion (CR).

10. A network management element (NME) to any one of the previous claims 8 to 9, wherein the control unit (UC) is further able to prune a path tree node (ND) which outgoing path doesn't respect at least one specified constraint (CT).

11. A network management element (NME) according to any one of the previous claims 8 to 10, wherein a request (NMEREQ) comprises a network management element chain recorder (NMEPth) for recording information of the network management element (NME) under the scope of said domain (D) before forwarding of the request (NMEREQ).

12. A network management element (NME) according to any one of the previous claims 8 to 11, wherein a request (NMEREQ) comprises a time to live counter (TTL) for limiting the domains (D) wherein the path trees are to be expanded.

13. A network management element (NME) according to any one of the previous claims 8 to 12, wherein it further comprises a target waiting timer (TPWT) for further activating the sending of the optimal path (PTHo).

14. A network management element (NME) according to any one of the previous claims 8 to 13, wherein it is a path computation element (PCE).

15. A multi-domain network system (NTW) for selecting an optimal path between a source network node (A) of a source domain (D1) and a target network node (Z) of a target domain (D2) across a plurality of domains (D), a domain (D) comprises a plurality of network nodes (ND) and at least one network management element (NME), said multi-domain network system (NTW) being able to manage :
- a source network management element (NME1) which is within the source domain (D1);
- at least one intermediate network management element (NMEx, NMEy) which is within an intermediate domain (D) between the source domain (D1) and the target domain (D2); and
- a target network management element (NME2) which is within the target domain (D2);
as claimed in any one of the previous claims 8 to 14.

16. A computer program product for a computer, comprising a set of instructions, which when loaded into said computer, causes the computer to carry out the building method as claimed in any one of claims 1 to 6.

## Amended claims

### Amended claims in accordance with Rule 137(2) EPC.

**1.** A method of building a path between a network management element (NME) of a domain (D) and another network management element (NME) of neighbor domains (Dn), a domain (D) comprising a plurality of network nodes (ND), said method comprising the steps of :
- When none of the network nodes (ND) of said domain (D) is a target network node (Z):
- Expanding a path tree (VPT) from at least one network node (ND) of said domain (D) towards entry network nodes (NDn) of at least one neighbor domain (Dn) ;
- Applying node colors (Co) to path tree nodes (VPT_N) to indicate whether a path tree node (VPT_N) is or is not under the scope of a neighbor domain (D) to which a request (NMEREQ) is to be forwarded ; and
- Forwarding a request (NMEREQ) with said path tree expanded (VPT) to at least one network management element (NME) of said neighbor domain (Dn).
- When a network node (ND) of said domain (D) is a target network node (Z) :
- Building an aggregate path tree (VPTa) from the path trees (VPT) received with the requests (NMEREQ) by the target network management element (NME2); and
- When all path tree node colors (Co) of the aggregate path tree (VPTa) are of a same predefined color (Cref), sending back an optimal path (PTHo) selected from the aggregate path tree (VPTa) according to at least one selection criterion (CR).

**2.** A method according to the previous claim 1, wherein the expanding step comprises a sub-step of pruning a path tree node (ND) which outgoing path doesn't respect at least one specified constraint (CT).

**3.** A method according to any one of the previous claims 1 to 2, wherein it comprises a further step of recording information of the network management element (NME) under the scope of said domain (D) before forwarding of the request (NMEREQ).

**4.** A method according to any one of the previous claims, wherein it comprises a further step of further activating the sending of the optimal path (PTHo) based on a timer value.

**5.** A method according to any one of the previous claims, wherein it comprises a further step of limiting the domains (D) wherein a path tree (VPT) is expanded.

**6.** A method of selecting a path between a source network node (A) of a source domain (D1) and a target network node (Z) of a target domain (D2) across a plurality of domains (D), a domain (D) comprising a plurality of network nodes (ND) and at least one network management element (NME), said method comprising the steps of applying the building method as claimed in any one of the previous claims 1 to 5 to
- a source network management element (NME1) which is within the source domain (D1);
- at least one intermediate network management element (NMEx, NMEy) which is within an intermediate domain (D) between the source domain (D1) and the target domain (D2); and
- a target network management element (NME2) which is within the target domain (D2).

**7.** A network management element (NME) of a domain (D) able to build a path with another network management element (NME) of neighbor domains (Dn), a domain (D) comprising a plurality of network nodes (ND), said network management element comprising a control unit (UC) which is able to:
- When none of the network nodes (ND) of said domain (D) is a target network node (Z):
- Expand a path tree (VPT) from at least one network node (ND) of said domain (D) towards entry network nodes (NDn) of at least one neighbor domain (Dn) ;
- Apply node colors (Co) to path tree nodes (VPT_N) to indicate whether a path tree node (VPT_N) is or is not under the scope of a neighbor domain (D) to which a request (NMEREQ) is to be forwarded ; and
- Forward a request (NMEREQ) with said path tree expanded (VPT) to at least one network management element (NME) of said neighbor domain (Dn).
- When a network node (ND) of said domain (D) is a target network node (Z) :
- Build an aggregate path tree (VPTa) from the path trees (VPT) received with the requests (NMEREQ) by the target network management element (NME); and
- When all path tree node colors (Co) of the aggregate path tree (VPTa) are of a same predefined color (Cref), send back an optimal path (PTHo) selected from the aggregate path tree (VPTa) according to at least one selection criterion (CR).

**8.** A network management element (NME) to the previous claim 7, wherein the control unit (UC) is further able to prune a path tree node (ND) which outgoing path doesn't respect at least one specified constraint (CT).

**9.** A network management element (NME) according to any one of the previous claim 7 or claim 8, wherein a request (NMEREQ) comprises a network management element chain recorder (NMEPth) for recording information of the network management element (NME) under the scope of said domain (D) before forwarding of the request (NMEREQ).

**10.** A network management element (NME) according to any one of the previous claims 7 to 9, wherein a request (NMEREQ) comprises a time to live counter (TTL) for limiting the domains (D) wherein the path trees are to be expanded.

**11.** A network management element (NME) according to any one of the previous claims 7 to 10, wherein it further comprises a target waiting timer (TPWT) for further activating the sending of the optimal path (PTHo).

**12.** A network management element (NME) according to any one of the previous claims 7 to 11, wherein it is a path computation element (PCE).

**13.** A multi-domain network system (NTW) for selecting an optimal path between a source network node (A) of a source domain (D1) and a target network node (Z) of a target domain (D2) across a plurality of domains (D), a domain (D) comprises a plurality of network nodes (ND) and at least one network management element (NME), said multi-domain network system (NTW) being able to manage :
- a source network management element (NME1) which is within the source domain (D1);
- at least one intermediate network management element (NMEx, NMEy) which is within an intermediate domain (D) between the source domain (D1) and the target domain (D2); and
- a target network management element (NME2) which is within the target domain (D2);
as claimed in any one of the previous claims 7 to 12.

**14.** A computer program product for a computer, comprising a set of instructions, which when loaded into said computer, causes the computer to carry out the building method as claimed in any one of claims 1 to 5.
